**Europäisches Patentamt**

(19) **European Patent Office**

**Office européen des brevets**

(11) Veröffentlichungsnummer: **0 009 714**
**B1**

(12) # EUROPÄISCHE PATENTSCHRIFT

(45) Veröffentlichungstag der Patentschrift:
08.05.85

(51) Int. Cl.⁴: **G 10 L 7/10, G 09 B 21/00**

(21) Anmeldenummer: **79103500.9**

(22) Anmeldetag: **18.09.79**

(54) Verfahren und Vorrichtung zur akustisch-optischen Umwandlung von Signalen.

(30) Priorität: **04.10.78 DE 2843180**

(43) Veröffentlichungstag der Anmeldung:
**16.04.80 Patentblatt 80/8**

(45) Bekanntmachung des Hinweises auf die Patenterteilung:
**08.05.85 Patentblatt 85/19**

(84) Benannte Vertragsstaaten:
**AT BE DE FR GB IT LU NL SE**

(56) Entgegenhaltungen:
**US - A - 3 386 035**
**US - A - 3 581 192**
**US - A - 3 604 852**
**US - A - 3 639 691**

(73) Patentinhaber: **ROBERT BOSCH GMBH, Postfach 50,
D-7000 Stuttgart 1 (DE)**

(72) Erfinder: **Esser, Günter, Prof. Dr., Eickelscheidt 5,
D-4030 Ratingen 6 (DE)**

(74) Vertreter: **Schmidt, Hans-Ekhardt, Robert Bosch GmbH
Geschäftsbereich Elektronik Patent- und
Lizenzabteilung Forckenbeckstrasse 9-13,
D-1000 Berlin 33 (DE)**

**Beschreibung**

Die Erfindung geht von einem Verfahren zur Umwandlung akustischer Signale in optische Signale nach der Gattung des Hauptanspruchs und von einer Vorrichtung zur Durchführung eines Verfahrens nach der Gattung des unabhängigen Anspruchs 2 aus.

Es sind viele Versuche unternommen worden, der eingeschränkten oder fehlenden Hörfähigkeit bei Schwerhörigen und Gehörlosen dadurch zu begegnen, daß man die Sprache in verschiedenartige Signalformen umwandelt. Hierzu sind besonders die Frequenztransformierung, die Vibrationsübertragung auf die Haut und die optische Umwandlung der verschiedenen »Visible-Speech«-Verfahren zu nennen.

Bei der Frequenztransformation werden die Sprachsignale eine oder zwei Oktaven tiefer transponiert, weil bei den meisten Schwerhörigen die Hörverluste in den tiefen Frequenzen nicht so groß sind wie im Hochtonbereich. Das Verfahren hat sich jedoch, ähnlich wie die Vibrationsübertragung auf die Haut, nicht im größeren Rahmen durchsetzen können, da die Anzahl der je Sekunde übertragbaren Informationsbits zu gering ist.

Bei einem bekannten »Visible-Speech«-Verfahren (»Einführung in die Akustik« von Ferdinand Trendelenburg, 3. umgearbeitete Auflage, Springer-Verlag, 1961, Seite 491, 492) kommen die Schallspektrogramme auf dem Leuchtschirm einer Braunschen Röhre besonderer Konstruktion zur Darstellung, und zwar weist diese Röhre einen zylinderförmigen Leuchtschirm auf, der am Beobachter vorbei um eine senkrechte Achse rotiert und auf den ein aus der Mitte des Zylinders kommender Kathodenstrahl fällt. Längs der senkrechten Achse liegt die Frequenzskala. Die momentane Erregung der einzelnen oktavenmäßig aufgeteilten zwölf Filter wird mit einem rotierenden Schalter abgegriffen. Entsprechend der Stärke der Erregung der einzelnen Filter regelt sich die Stärke des über die senkrechte Achse laufenden Kathodenstrahls, so daß längs dieser Achse das Schallspektrum entworfen wird. Wenn sich der mit einer nachleuchtenden Schicht bestrichene Leuchtschirm am Beobachter vorbeidreht, dann sieht dieser sehr anschaulich die Stärkeverteilung der in Frage stehenden Schallvorgänge auf die verschiedenen Bereiche des Spektrums und ihre zeitlichen Variationen. Dabei wird in X-Richtung die Zeit und in Y-Richtung die Frequenz aufgetragen und durch den Schwärzungsgrad die Amplitude gekennzeichnet. Diese Form der Signalumwandlung hat zwar für die Stimmerkennung eine große Bedeutung erlangt, so zum Beispiel in der Kriminalistik; aber die in den Bildern enthaltene Information ist nur mit Hilfe feinerer Analyseverfahren zu erfassen, so daß sich diese Umwandlung als Medium der Kommunikation nicht bewährt hat.

Ein bekannter Frequenzspektrumanalysator (US-A-3 581 192) dient zum Prüfen verschiedenartiger Schallquellen. Dabei wird das Schallfrequenzspektrum mittels Bandpaßfilter in Frequenzbereiche unterteilt. Auf einem Farbbildschirm werden dann in der Y-Richtung die Frequenz und in X-Richtung die Zeit aufgetragen. Die augenblickliche Gesamtintensität wird durch den Analysator nicht dargestellt, sondern es werden nur die Intensitäten der einzelnen Frequenzkomponenten wiedergegeben. Beispielsweise werden kleine Intensitäten durch einen blauen Farbton und große Intensitäten durch einen roten Farbton gekennzeichnet.

Aus der US-A-3 639 691 ist es weiterhin bekannt, die augenblickliche Gesamtintensität von Sprachsignalen durch die Helligkeit eines auf dem Bildschirm eines Farbfernsehempfängers wiedergegebenen Bildes darzustellen. Die Bandmittenfrequenz des jeweiligen Tonfrequenzspektrums wird dabei in einen entsprechenden Farbton umgewandelt, und die Bandbreite bestimmt die Farbsättigung. Die einzelnen Tonfrequenzen unterscheiden sich auf dem wiedergegebenen Bild somit nicht durch bestimmte Farbtöne.

Das erfindungsgemäße Verfahren zur Umwandlung akustischer Signale in optische Signale nach dem Hauptanspruch hat den Vorteil, daß die akustischen Signale in farbige Bildsignale umgewandelt werden, die das menschliche Auge nicht nur als räumlich ausgedehnte Bilder erfaßt, sondern auch in ihren verschiedenen Farbtönen unterscheidet. Möglich ist dies durch die hohe Verarbeitungskapazität des Auges.

Durch die in dem Anspruch 2 angegebene Vorrichtung zur Durchführung eines Verfahrens nach dem Hauptanspruch wird eine besonders vorteilhafte Umwandlung erreicht, indem jeder Schallfrequenz ein bestimmter Farbton und damit jedem akustischen Spektrum eine genau definierte Farbmischung zugeordnet wird.

Vorteilhafte Weiterbildungen der Erfindung sind in den Unteransprüchen angegeben. Dabei ist es besonders vorteilhaft, wenn die dreikanalige Filtereinrichtung drei parallelgeschaltete Bandpässe mit dreieckförmigen Durchlaßcharakteristiken umfaßt.

Weitere Vorteile und Einzelheiten der Erfindung sind nachstehend anhand eines in der Zeichnung dargestellten Ausführungsbeispiels näher erläutert. Es zeigt

Fig. 1 ein Blockschaltbild einer erfindungsgemäßen Vorrichtung zur Umwandlung akustischer Signale in optische Signale und

Fig. 2 einen Kennlinienverlauf einer dreikanaligen Filtereinrichtung zur Verwendung in einer Vorrichtung nach der Erfindung.

Das Verfahren, akustische Signale in optische Signale umzuwandeln, um Schwerhörigen oder Gehörlosen bei der Kommunikation zu helfen, ist besonders deshalb vorteilhaft, weil das Auge eine Informationsmenge von $10^6$ bit/s verarbeiten kann, während das Ohr lediglich eine Informationsmenge von $3,5 \cdot 10^4$ bit/s aufnehmen kann. Das Auge ist also in der Lage, eine etwa dreißigmal größere Informationsmenge pro Sekunde als das Ohr aufzunehmen.

Dabei muß nicht unbedingt die gesamte akustische Information, die auf das Ohr eines Schwerhörigen trifft, auch übertragen werden; denn ein sich artikulierender Mensch erzeugt lediglich eine Informationsmenge von $10^3$ bit/s, das heißt etwa ein Tausendstel der Informationsmenge, die vom Auge verarbeitet werden kann.

Weiterhin haben Auge und Ohr ein unterschiedliches zeitliches und räumliches Auflösungsvermögen. Das Gehör weist eine hohe Zeitauflösung auf, während dagegen sein räumliches Auflösungsvermögen nur schwach ausgebildet ist. Das Auge hat dagegen ein schlechtes Zeitauflösungsvermögen, während es jedoch in der Lage ist, räumlich ausgedehnte Bilder in vielen Einzelheiten gleichzeitig zu erfassen.

Aus den vorgenannten Gründen sind für eine Umwandlung akustischer Signale in optische Signale vorzugsweise zwei Überlegungen ableitbar. Wenn einerseits das Auge akustische Vorgänge analysieren soll, dann sind die zeitlich schnell aufeinanderfolgenden Vorgänge räumlich nebeneinander darzustellen. Für eine solche räumliche Anordnung der aufeinanderfolgenden Vorgänge ist eine Bildspeicherung besonders vorteilhaft, und zwar vorzugsweise eine elektronische Bildspeicherung. Andererseits ist die hohe Verarbeitungskapazität des Auges nicht nur darin begründet, daß räumlich sich ändernde Bilder erfaßt werden können, sondern daß auch viele verschiedene Farbtöne unterschieden werden können. Deshalb wird nach dem vorliegenden Verfahren jeder Schallfrequenz ein bestimmter Farbton und jedem akustischen Spektrum eine genau definierte Farbmischung zugeordnet.

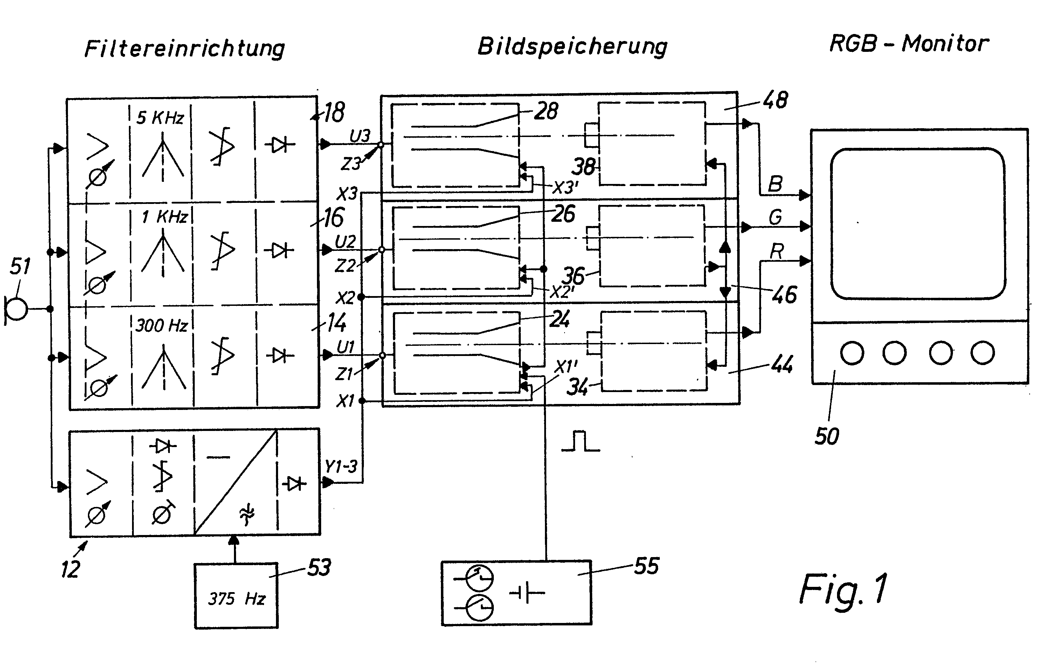

In einer erfindungsgemäßen Vorrichtung zur Umwandlung akustischer Signale in optische Signale gemäß dem Blockschaltbild nach Fig. 1 wird ein von einem Mikrofon 51 geliefertes Eingangssignal den Eingängen eines akustoelektrischen Wandlers mit parallelgeschalteten Filtern 14, 16, 18 und einer Modulatorvorrichtung 12 zugeführt. Dabei wird das Eingangssignal in der Modulatorvorrichtung einem von einem Generator 53 gelieferten Träger von 375 Hz aufmoduliert und anschließend gleichgerichtet. Die Modulatorvorrichtung 12 gibt an ihrem Ausgang ein gleichgerichtetes Signal Y1—3 ab, dessen Amplitude in jedem Zeitpunkt dem Schallpegel des Eingangssignals entspricht. Das gleichgerichtete Signal wird jeweils an erste Eingänge X1, X2, X3 von Bildspeichereinheiten 44, 46, 48 geliefert. An zweiten Eingängen Z1, Z2, Z3 der jeweiligen Bildspeichereinheiten liegen jeweils die ebenfalls gleichgerichteten Ausgangssignale der Filtereinrichtung 14, 16, 18. Ausgangssignale R, G, B der jeweiligen Bildspeichereinheiten 44, 46, 48 sind auf die drei Farbkanonen eines Farbmonitors 50 geschaltet und steuern die Stärke der Kathodenstrahlen der Farbkanonen.

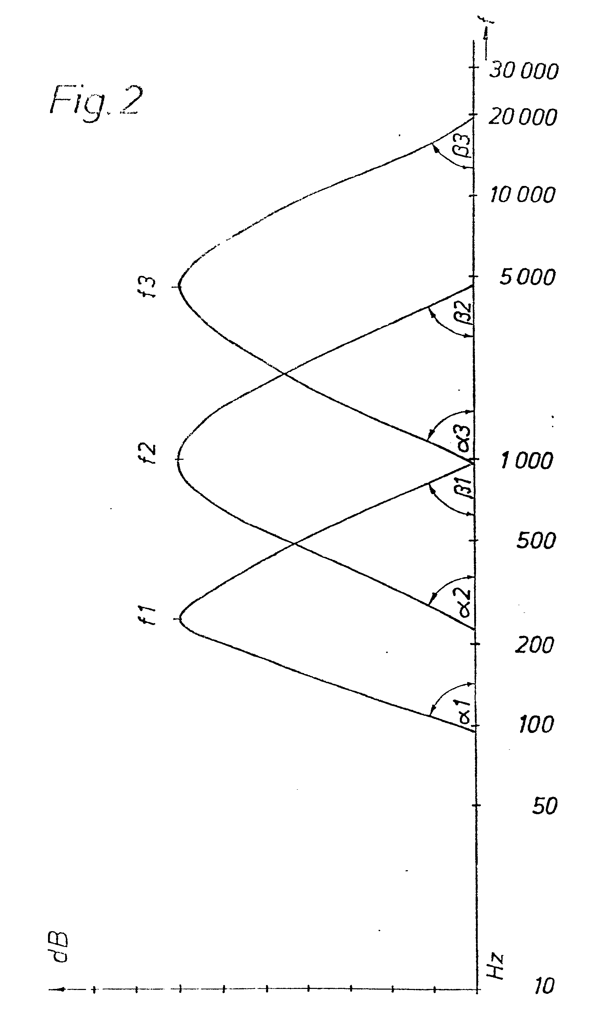

Das Kernstück der Vorrichtung zur Schall-Farbbild-Transformation ist der akustoelektrische Wandler, der aus den drei parallelgeschalteten Filtern 14, 16, 18, das sind Bandpässe, besteht, deren Durchlaßcharakteristiken etwa dreieckförmig verlaufen (Fig. 2). Dabei überlappen sich die Dreiecke vorteilhafterweise derart, daß in dem von den drei Filtern überstrichenen Gesamtbereich jeder Tonfrequenz f ein charakteristisches Verhältnis von Ausgangsspannungen U1, U2, U3 der drei gleichgerichteten Ausgangssignale zugeordnet ist, so daß die Beziehung gilt:

$$f \triangleq U1 : U2 : U3.$$

Diese drei Spannungen steuern bei einer vorzugsweise elektronischen Bildspeicherung mit entsprechender Analog/Digital-Digital/Analog-Umwandlung die drei Farbkanonen des Farbmonitors, so daß jeder Tonfrequenz ein individueller Farbton zugeordnet wird.

Für die Ermittlung der optimalen Filterparameter — Mittenfrequenzen f1, f2, f3, Flankenwinkel $\alpha$1, $\alpha$2, $\alpha$3 und $\beta$1, $\beta$2 und $\beta$3 (Fig. 2) — werden vorteilhafterweise von den Vokalen, Umlauten und Konsonanten der deutschen Sprache in verschiedener Kombination Echtzeit-Frequenzanalysen durchgeführt. Dabei sind diese Analysen von unterschiedlichen Normalsprechern und einer Vielzahl von Schwerhörigen anzufertigen. Aus dem so ermittelten Datenmaterial sind die obengenannten Filterparameter so auszuwählen, daß die Unterschiede zwischen Normalsprache und Schwerhörigen- oder Gehörlosensprache deutlich und spontan erkennbar zur Geltung kommen.

In Fig. 1 ist das elektronische Bildspeichersystem aus Bildspeichereinheiten 44, 46, 48, das am besten durch Mikroprozessoren realisiert wird, der Übersichtlichkeit halber mit handelsüblichen optischen Geräten ausgerüstet. Jedem Filter der dreikanaligen Filtereinrichtung 14, 16, 18 ist eine mit einem Leuchtschirm versehene Kathodenstrahlvorrichtung 24, 26, 28 nachgeschaltet, an deren ersten Eingängen X1', X2', X3' jeweils das gleichgerichtete Signal Y1—3 und an deren zweiten Eingängen Z1', Z2', Z3' die gleichgerichteten Ausgangssignale der vorgeschalteten Filtereinrichtung zur Modulation der Helligkeit der auf den Nachleuchtschirmen aufgezeichneten Bilder jeweils anliegen. Dabei werden die Kathodenstrahlvorrichtungen von einem Impulsgeber 55 getriggert, indem nur eine Kathodenstrahlvorrichtung getriggert wird, die ihrerseits die beiden anderen Kathodenstrahlvorrichtungen synchronisiert. Vor den Nachleuchtschirmen der Kathodenstrahlvorrichtungen ist je eine Aufnahmevorrichtung 34, 36, 38 angeordnet, beispielsweise eine Fernsehkamera, deren jeweilige Ausgangssignale die Farbkanonen der angeschlossenen Farbmonitoreinrichtung 50 steuern. Die zu erreichende Bildqualität stellt einen guten Kompromiß dar, wobei die Helligkeitssteuerung bei Verwendung von Kathodenstrahlvorrichtungen mit einem größeren Dynamikbereich für die Helligkeit unproblematisch ist. Die handelsüblichen Geräte für eine Bildspeicherung sind in Fig. 1 durch gestrichelte Linien dargestellt.

Obgleich die einzelnen Baueinheiten gemäß Fig. 1 als getrennte Blöcke dargestellt sind, kann die gesamte Vorrichtung integriert werden, wobei dann Elektronikteil und Bildschirm in einem Gehäuse enthalten sind.

Besonders vorteilhaft ist eine Miniaturisierung des gesamten Systems in der Weise, daß das Gerät am Körper zu tragen ist und die Bildsignale über eine Glasfaseroptik in eine speziell konstruierte Brille eingespiegelt werden.

Vorteile einer Sprach-Farbbild-Transformation bestehen darin, daß unabhängig vom Sprecher aus den farbigen Bildern die entsprechenden Worte erkannt werden können. Darüber hinaus können bei etwas Übung ebenfalls sprachliche Eigenheiten der einzelnen Sprecher den Bildern entnommen werden. Die deutlichen Unterschiede zwischen den Sprach-Bildern eines Normalsprechers und eines Schwerhörigen ermöglichen dem Schwerhörigen durch Übung eine verhältnismäßig schnelle Besserung seiner Artikulationsfehler.

**Patentansprüche**

1. Verfahren zur Umwandlung von akustischen Signalen, insbesondere der Sprache, in optische Signale, wobei die akustischen Signale in elektrische Signale gewandelt und diese über parallelgeschaltete Filter zerlegt und auf einem farbigen Bildschirm sichtbar gemacht werden, wobei die Zeitachse x der Zeitachse des akustischen Signals entspricht und wobei entsprechend der Stärke der Erregung der einzelnen Filter die Stärke eines Kathodenstrahles gesteuert wird, dadurch gekennzeichnet, daß die Amplitude y der Anzeige dem Schallpegel des nicht zerlegten Signals entspricht und daß jeder Schallfrequenz ein bestimmter Farbton zugeordnet wird, so daß jedem akustischen Spektrum eine eigene, genau definierte Farbmischung entspricht.

2. Vorrichtung zur Durchführung eines Verfahrens nach Anspruch 1 mit einem akustoelektrischen Wandler, parallelgeschalteten Filtern zur Zerlegung der in elektrische Signale gewandelten akustischen Signale, insbesondere der Sprache, und einem Leuchtschirm, auf dem die zerlegten akustischen Signale sichtbar gemacht werden, indem entsprechend den Ausgangssignalen der einzelnen Filter die Stärke eines Kathodenstrahls gesteuert wird, dadurch gekennzeichnet, daß parallel zu den Eingängen einer dreikanaligen Filtereinrichtung (14, 16, 18) eine Modulatorvorrichtung (12) geschaltet ist, daß die Modulatorvorrichtung (12) zur Lieferung eines gleichgerichteten Signals (Y1—3) mit einer in jedem Zeitpunkt dem Schallpegel am akustoelektrischen Wandler (51) entsprechenden Amplitude ausgebildet ist, daß der dreikanaligen Filtereinrichtung eine Bildspeichervorrichtung (44, 46, 48) nachgeschaltet ist, an deren ersten Eingängen (X1, X2, X3) jeweils das gleichgerichtete Signal (Y1—3) der Modulatorvorrichtung und an deren zweiten Eingängen (Z1, Z2, Z3) die gleichgerichteten Ausgangssignale der vorgeschalteten Filtereinrichtung anliegen, und daß eine Farbmonitoreinrichtung (50) vorgesehen ist, deren Farbkanonen mit den den einzelnen Filterkanälen zugehörigen Ausgangssignalen der Bildspeichervorrichtung steuerbar sind.

3. Vorrichtung nach Anspruch 2, dadurch gekennzeichnet, daß die dreikanalige Filtereinrichtung (14, 16, 18) drei parallelgeschaltete Bandpässe mit dreieckförmigen Durchlaßcharakteristiken umfaßt.

4. Vorrichtung nach Anspruch 3, dadurch gekennzeichnet, daß die dreikanalige Filtereinrichtung im von den drei Bandpässen überstrichenen Gesamtbereich für jede akustische Frequenz (f) ein charakteristisches Verhältnis der drei gleichgerichteten Ausgangsspannungen (U1, U2, U3) der Filtereinrichtung erzeugt.

5. Vorrichtung nach einem der Ansprüche 2 bis 4, dadurch gekennzeichnet, daß der dreikanaligen Filtereinrichtung (14, 16, 18) als Speichervorrichtung (44, 46, 48) jeweils mit Nachleuchtschirmen ausgerüstete Kathodenstrahlvorrichtungen (24, 26, 28) nachgeschaltet sind, an deren ersten Eingängen (X1', X2', X3') jeweils das gleichgerichtete Signal (Y1—3) und an deren zweiten Eingängen (Z1', Z2', Z3') das gleichgerichtete Ausgangssignal der jeweils vorgeschalteten Filtereinrichtungen zur Modulation der Helligkeit der auf den Nachleuchtschirmen aufgezeichneten Bilder anliegen, und daß vor den Nachleuchtschirmen jeweils eine Aufnahmevorrichtung (34, 36, 38) angeordnet ist, deren Ausgangssignale jeweils die Farbkanonen der Farbmonitoreinrichtung (50) steuern.

6. Vorrichtung nach einem oder mehreren der Ansprüche 2 bis 4, dadurch gekennzeichnet, daß als Bildspeichervorrichtung (44, 46, 48) ein elektronisches System eingesetzt ist.

7. Vorrichtung nach einem oder mehreren der Ansprüche 2 bis 4, dadurch gekennzeichnet, daß als Bildspeichervorrichtung (44, 46, 48) Mikroprozessoren angeschlossen sind.

**Claims**

1. A method of converting acoustic signals, particularly speech signals, into optical signals, the acoustic signals being converted to electrical signals and the latter being split up by way of parallel-connected filters and being made visible on a colour screen, the time axis x corresponding to the time axis of the acoustic signal, and the intensity of the cathode ray being controlled in conformity with the intensity of the excitation of the individual filters, characterised in that the amplitude y of the display corresponds to the sound level of the signal which has not been split up, and that a specific colour is associated with each sound frequency, so that an individual, accurately defined colour mixture corresponds to each acoustic spectrum.

2. An apparatus for performing a method as claimed in claim 1, having an acoustoelectric transducer, parallel-connected filters for splitting up the acoustic signals, particularly speech signals, converted to electrical signals, and a luminescent screen on which the split-up acoustic signals are made visible by controlling the intensity of a cathode beam in conformity with the output signals of the individual filters, characterised in that a modulator device (12) is connected in parallel with the inputs of a three-channel filter device (14, 16, 18), that the modulator device (12) is constructed to supply a rectified signal (Y1—3) having an amplitude corresponding at any instant to the sound level on the acoustoelectrical transducer (51), that there is connected to the output of the three-channel filter device an image storage device (44, 46, 48) to the first inputs (X1, X2, X3) of which are applied the rectified signals (Y1—3) of the modulator device, respectively, and to the second inputs (Z1, Z2, Z3) of which are applied the rectified output signals of the filter device connected on the input side, and that there is provided a colour monitor device (50) whose colour guns are controllable by the output signals, associated with the individual filter channels, of the image storage device.

3. An apparatus as claimed in claim 2, characterised in that the three-channel filter device (14, 16, 18) comprises three parallel-connected band-pass filters having triangular transmission characteristics.

4. An apparatus as claimed in claim 3, characterised in that the three-channel filter device produces a characteristic ratio of the three rectified output voltages (U1, U2, U3) of the filter device for each acoustic frequency (f) in the total range covered by the three band-pass filters.

5. An apparatus as claimed in one of the claims 2 to 4, characterised in that cathode ray devices (24, 26, 28), each equipped with a long persistence screen, are connected as storage devices (44, 46, 48) to the output of the three-channel filter device (14, 16, 18), to the first inputs (X1', X2', X3') of which cathode ray devices are applied the rectified signals (Y1—3) respectively, and to the second inputs (Z1', Z2', Z3') of which are applied the rectified output signals of the respective filter devices connected on the input side for the purpose of modulating the brightness of the images recorded on the long persistence screens, and that there is disposed in front of each of the long persistence screens a respective recording device (34, 36, 38) whose output signals control the respective colour guns of the colour monitor device (50).

6. An apparatus as claimed in one or more of claims 2 to 4, characterised in that an electronic system is used as the image storage device (44, 46, 48).

7. An apparatus as claimed in one or more of claims 2 to 4, characterised in that microprocessors are connected as the image storage device (44, 46, 48).

## Revendications

1. Procédé pour la conversion de signaux acoustiques, notamment de la parole, en signaux optiques, les signaux acoustiques étant convertis en signaux électriques et ceux-ci étant décomposés par l'intermédiaire de filtres branchés en parallèle et rendus visibles sur un écran coloré, l'axe des temps (x) correspondant à l'axe des temps du signal acoustique et l'intensité d'un faisceau cathodique étant commandée en correspondance à l'intensité d'excitation des différents filtres, procédé caractérisé en ce que l'amplitude (y) de l'affichage correspond au niveau sonore du signal non décomposé et qu'à chaque fréquence sonore est associée une nuance de couleur déterminée, de sorte qu'à chaque spectre acoustique correspond un mélange de couleurs défini de façon précise et qui lui est propre.

2. Dispositif pour la mise en œuvre d'un procédé selon la revendication 1, avec un convertisseur acousto-électrique, des filtres branchés en parallèle pour la décomposition des signaux acoustiques convertis en signaux électriques, notamment de la parole et un écran luminescent sur lequel sont rendus visibles les signaux acoustiques décomposés, en ce que, de façon correspondante aux signaux de sortie des différents filtres, l'intensité d'un faisceau cathodique est commandée, dispositif caractérisé en ce que, en parallèle sur les entrées d'un dispositif de filtrage à trois canaux (14, 16, 18), est branché un dispositif modulateur (12), en ce que le dispositif modulateur (12), pour délivrer un signal redressé (Y1—3), est mis en œuvre avec une amplitude correspondant à chaque instant au niveau sonore sur le convertisseur acousto-électrique (51), en ce que, à la suite du dispositif de filtrage à trois canaux, est branché un dispositif de mémorisation d'image (44, 46, 48), aux premières entrées (X1, X2, X3) duquel est respectivement appliqué le signal redressé (Y1—3) du dispositif modulateur et aux secondes entrées (Z1, Z2, Z3) duquel sont appliqués les signaux de sortie redressés du dispositif de filtrage branché en amont, et en ce qu'il est prévu un dispositif de contrôle de couleur (50) dont les canons de couleur sont susceptibles d'être commandés avec les signaux de sortie, associés aux différents canaux de couleur, du dispositif de mémorisation d'image.

3. Dispositif selon la revendication 2, caractérisé en ce que le dispositif de filtrage à trois canaux (14, 16, 18) comprend trois passe-bandes branchés en parallèle avec des caractéristiques de passage triangulaires.

4. Dispositif selon la revendication 3, caractérisé en ce que le dispositif de filtrage à trois canaux engendre dans l'étendue totale balayée par les trois passe-bandes, pour chaque fréquence acoustique (f) un rapport caractéristique des trois tensions de sortie redressées (U1, U2, U3) du dispositif de filtrage.

5. Dispositif selon l'une des revendications 2 à 4, caractérisé en ce que, à la suite du dispositif de filtrage à trois canaux (14, 16, 18), sont branchés des dispositifs à faisceau cathodique (24, 26, 28) respectivement équipés d'écrans luminescents, et aux premières entrées (X1', X2', X3') est respectivement appliqué le signal redressé (Y1—3) tandis qu'à leurs secondes entrées (Z1', Z2', Z3') est appliqué le signal de sortie redressé des dispositifs de filtrage respectivement branchés en amont pour la modulation de la luminosité des images enregistrées sur les écrans luminescents, et en ce que, en amont des écrans luminescents, est respectivement disposé un dispositif d'enregistrement (34, 36, 38) dont les signaux de sortie commandent respectivement les canons de couleur du dispositif de contrôle de couleur (50).

6. Dispositif selon une ou plusieurs des revendications 2 à 4, caractérisé en ce que comme dispositif de mémorisation des couleurs (44, 46, 48), il est mis en œuvre un système électronique.

7. Dispositif selon une ou plusieurs des revendications 2 à 4, caractérisé en ce que, comme dispositif de mémorisation des couleurs (44, 46, 48), sont raccordés des microprocesseurs.

Fig.1

Fig. 2